# EUROPEAN PATENT SPECIFICATION

(11) **EP 2 868 934 B1**
(45) Date of publication and mention of the grant of the patent: **12.07.2017**
(21) Application number: 14189599.5
(22) Date of filing: 20.10.2014
(51) Int. Cl.: F16B 21/08, F16M 13/00

(54) **Connector with a connecting hole having a teeth-like configuration**
Verbinder mit einem Verbindungsloch mit zahnähnlicher Konfiguration
Raccord avec un trou de raccordement présentant une configuration en forme de dents

(30) Priority: 05.11.2013 TW 102140084
(43) Date of publication of application: 06.05.2015
(73) Proprietor: Chang, Michael Chau-Lun, Zhongshan Dist., 104 Taipei City (TW)
(72) Inventor: Chang, Michael Chau-Lun, Zhongshan Dist., 104 Taipei City (TW)
(74) Representative: Lang, Christian

(56) References cited:
- US-A- 3 443 783
- US-A- 3 643 296
- US-A- 3 880 390
- US-A- 3 921 261
- US-A- 4 786 025
- US-A- 5 388 359
- US-A1- 2013 206 942

## Description

### BACKGROUND OF THE INVENTION

### 1. FIELD OF THE INVENTION

The present invention relates to a connecting hole structure, and particularly to a connecting hole having a teeth-like configuration adapted to connect different parties, mainly in between of a positioning bracket, a protective sheath, an extension rod, or a connector for holding a mobile device, a tablet computer, an electronic book, a video game console, or a case.

### 2. RELATED ART

A conventional positioning bracket for a mobile device is disclosed in Taiwan Patent No.: M457113. The conventional positioning bracket is intended to hold a mobile device and is movable and has a connector for connecting the positioning bracket and a securing member so as to allow the positioning bracket to be rotatable. The securing member is intended to be secured on an external article so as to suspend the positioning bracket to hold the mobile device. The connector has a first connecting portion and a second connecting portion both detachably disposed on opposite sides of the connector for connecting the positioning bracket and the securing member. In this manner, the connector is capable of being connected with the positioning bracket and the securing member, and the mobile device is therefore rotated at different angles in conjunction with rotation of the first connecting portion or the second connecting portion as well as with the positioning bracket and the securing member. Document US 3 921 261 A refers to an one-piece fastener that can be rigidly secured on an aperture wall comprising a polygonal connecting hole having a teeth-like configuration, wherein the male connecting article comprises a connecting element formed with multiple circumferentially outwardly projecting portions, wherein the male connecting article may be passed through the connecting hole and may be positioned by rotation of the male connecting article, such that the multiple projecting portions are not aligned with the connecting hole and base elements abut opposite sides and corners of the connecting hole to prevent translational and rotational movement of the fastener relative to the connecting hole.

Although the connector disclosed in the aforementioned prior art is capable of connecting the positioning bracket and the movable securing member and further allowing the positioning bracket to be rotatable, the connector connected to the positioning bracket and the securing member is through an engaging means, a fastening means, an embedding means, a clipping means, a magnetic suction means, a screw means, a hook-and-loop means, or an adhesive means. However, none of the above-mentioned means can provide a quickly, simply, and firmly connection for the connector, nor can they allow the positioning bracket to be rotated at various angles as required by users.

### SUMMARY OF THE INVENTION

Accordingly, an object of the present invention is to provide a connector as defined by claim 1.

In one aspect of the present invention, the plurality of tooth portions are integrally formed with the female connecting article or detachably connected with the female connecting article. The multiple circumferentially outwardly projecting portions and the connecting element are integrally formed with the male connecting article or are detachably connected with the male connecting article.

In another aspect of the present invention, the female connecting article or the male connecting article is one of an extension rod, a positioning device, a protective sheath, an adjustable sheath, a fixing element, a portable device, a tablet PC, an electronic book, an electronic game console, a case and a cable. Each of the plurality of tooth portions is arranged radially about the center of the connecting hole at a predetermined equiangular or at a predetermined non-equiangular, so as to form a symmetrical or an asymmetrical configuration. Each of the plurality of tooth portions has a round, arc, triangle, or polygonal profile and is connected with each other to form the teeth-like configuration.

In another aspect of the present invention, the multiple projecting portions are in alignment with the plurality of tooth portions in order to pass through the connecting hole, and after the multiple projecting portions pass through the connecting hole, the male connecting article is being rotated to enable the multiple projecting portions to be in non-alignment with the plurality of the tooth portions. Furthermore, the rotation of the male connecting article to be assembled with the connecting hole is in response to the friction between the outer periphery of the connecting element and the inner periphery of the connecting hole, whereby generating a frictional sound along with the rotation.

In one aspect of the present invention, the connecting element of the male connecting article has a hollow portion formed therein to enable the connecting element to be depressible so as to be mounted in the connecting hole. Furthermore, the connecting element has a depressed portion for being depressed to enable the connecting element to be mounted in the connecting hole.

With the foregoing structure of the connecting hole, the connecting hole disposed on the female connecting article of the present invention is capable of being quickly, simply and firmly connected to the male connecting article though the teeth-like configuration. Moreover, the female connecting article is rotatable through the connecting hole. As a result, users can use the connecting hole having the teeth-like configuration to connect various kinds of female connecting articles and male connecting articles without limitations of locations and places. Accordingly, the connecting hole having the teeth-like configuration of the present invention successfully overcomes the drawback of inconvenient and inefficient connection brought by the conventional connector.

### BRIEF DESCRIPTION OF THE DRAWINGS

FIG. 1 is a schematic perspective view showing a connecting hole having a teeth-like configuration of the present invention that is disposed on a positioning bracket;
FIG. 2 is a schematic perspective view of a male connecting article for being connected with the connecting hole of the present invention;
FIG. 3 is another perspective view of the male connecting article;
FIG. 4 is a schematic perspective view showing a connecting element assembled with the male connecting article;
FIG. 5 is a schematic explode view of the positioning bracket and the male connecting article of the present invention;
FIG. 6 is a perspective assembled view of FIG. 5;
FIG. 7 is a schematic cross-sectional view of the connecting hole of the present invention;
FIG. 8 is a front elevational view of the male connecting article;
FIG. 9 is a schematic cross-sectional view showing a second embodiment of the connecting hole;
FIG. 10 is a schematic cross-sectional view showing a third embodiment of the connecting hole;
FIG. 11 is a schematic cross-sectional view showing a fourth embodiment of the connecting hole;
FIG. 12 is a schematic cross-sectional view showing the connecting element passing through the connecting hole;
FIG. 13 is a schematic cross-sectional view showing a second embodiment of the connecting element passing through the connecting hole; and
FIG. 14 is a schematic cross-sectional view showing a third embodiment of the connecting element passing through the connecting hole.

### DESCRIPTION OF THE PREFERRED EMBODIMENTS

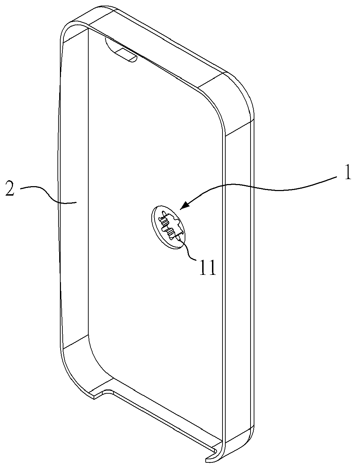

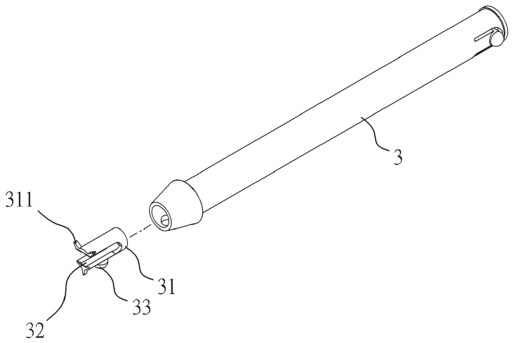

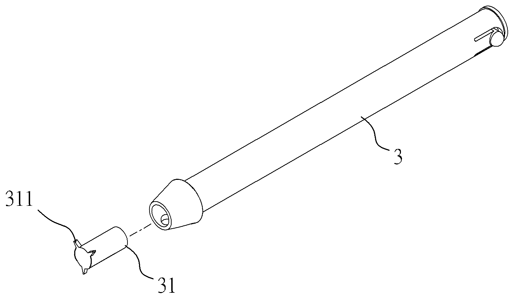

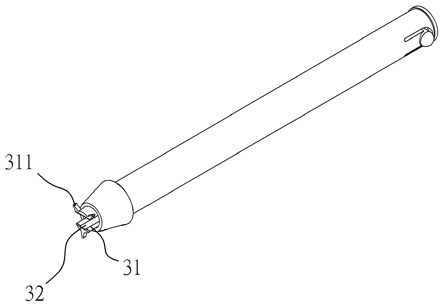

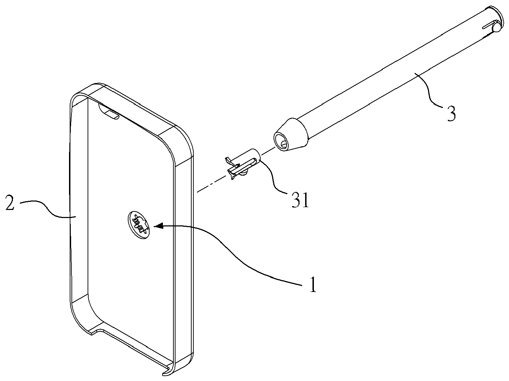

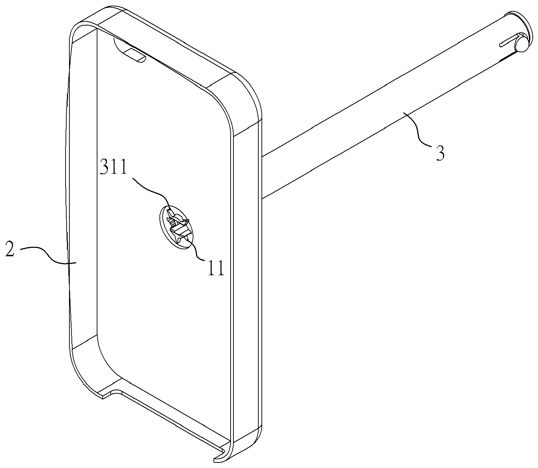

Referring to FIGS. 1 to 8 showing a connecting hole 1 having a teeth-like configuration of the present invention, which is disposed on a female connecting article, the female connecting article is exemplified as a positioning bracket 2 in this preferable embodiment. The connecting hole 1 having the teeth-like configuration is disposed on the positioning bracket 2 for connecting a male connecting article which is exemplified as a securing member 3. The securing member 3 is intended to be secured on an external article and suspend the positioning bracket 2 for holding a mobile device (not shown). The securing member 3 in this embodiment is exemplified as an extension rod which functions as a positioning device, wherein one end of securing member 3 is detachably connected with a connecting element 31. The connecting hole 1 is capable of being detachably disposed on the positioning bracket 2 or, as depicted in this embodiment, is integrally formed with the positioning bracket 2. The purpose that the connecting element 1 is detachably connected with the securing member 3 is to simplify manufacture and provide convenience of carrying and quick assembling for users. As shown in FIG. 2, the connecting element 31 comprises a hollow portion 32 formed therein and penetrating a front end of the connecting element 31 so as to divide the connecting element 31 into upper and lower portions. In this manner, the hollow portion 32 enables the connecting element 31 to be deformable and depressible so as to be mounted into the connecting hole 1 that has a diameter slightly smaller than a diameter of the connecting element 31. Alternatively, as shown in FIG 3, the connecting element 31 is in a solid state without forming the hollow portion 32 and is made of a material having a flexibility quality so as to be depressed to fit in the connecting hole 1.

A feature of the connecting hole 1 of the present invention is that the connecting hole 1 has a teeth-like configuration comprising a plurality of tooth portions 11 spaced apart from each other and arranged radially about a center of the connecting hole 1 at a predetermined angle. The connecting element 31 of the securing member 3 comprises multiple circumferentially outwardly projecting portions 311 corresponding in position to the plurality of tooth portions 11 so as to allow the circumferentially outwardly projecting portions 311 to pass through the connecting hole 1, wherein each of the multiple circumferentially outwardly projecting portions 311 has a length larger than a length of each of the plurality of tooth portions 11. More specifically, the connecting element 31 is being depressed to reduce a diameter thereof and the multiple projecting portions 311 are to be placed in alignment with the corresponding tooth portions 11 so as to pass through the tooth portions 11 and the connecting hole 1. After the multiple projecting portions 311 pass though the connecting hole 1, the upper and lower portions of the connecting element 31 are expanded to abut against the connecting hole 1 such that the multiple projecting portions 311 abut against a side surface of the connecting hole 1, and an outer periphery of the connecting element 31 is in frictional contact with an inner periphery of the connecting hole 1. After the connecting element 31 is mounted into the connecting hole 1 in place, the connecting hole 1 is positioned between the multiple circumferentially outwardly projecting portions 311 and one end of the securing member 3. Furthermore, the connecting element 31 is rotatable in a clockwise direction or a counterclockwise direction to enable the multiple projecting portions 311 to be in non-alignment with the plurality of the tooth portions 11 in such a way as to form an interleaving format between the tooth portions 11 and the multiple projecting portions 311 and to generate frictional contact therebetween. In this manner, the rotation of the connecting element 31 of the securing member 3 to be assembled with the connecting hole 1 is in response to the friction contact between the outer periphery of the connecting element 31 and the inner periphery of the connecting hole 1, whereby generating a frictional sound along with the rotation. Likewise, the positioning bracket 2 is rotatable about the connecting element 31 and is capable of being positioned with an engagement of the plurality of tooth portions 11 and the multiple projecting portions 311.

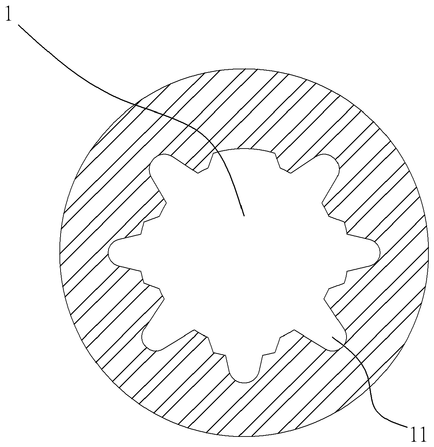

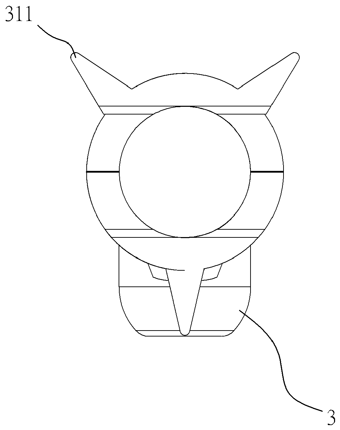

Referring to FIG. 2, the connecting element 31 has at least a depressed portion 33 formed on one side of the hollow portion 32 for being depressed to enable the connecting element 31 to be mounted in the connecting hole 1. The depressed portion 33 is integrally formed with the connecting element 31 and is depressible to deform the connecting element 31 through the hollow portion 32, whereby enabling the connecting element 31 to fit into the connecting hole 1. In a preferable embodiment, each of the plurality of tooth portions 11 is arranged radially about the center of the connecting hole 1 at a predetermined equiangular or at a predetermined non-equiangular, so as to form a symmetrical or an asymmetrical configuration. Furthermore, each of the plurality of tooth portions 11 has a same size as one another or a different size than one another. Specifically, each of the plurality of tooth portions 11 has a round, arc, triangle, or polygonal profile and is connected with each other to form the teeth-like configuration. Still further, number of the multiple circumferentially outwardly projecting portions 311 is less or more than or equal to number of the plurality of tooth portions 11. The purpose of determining number and size of the plurality of tooth portions 11 and the multiple projecting portions 311 is to ensure that the multiple projecting portions 311 are capable of passing through the plurality of tooth portions 11 so as to be assembled with the connecting hole 1. As shown in FIGS. 7 and 8, the connecting hole 1 has seven tooth portions 11, while the connecting element 31 has three projecting portions 311, wherein each of the seven tooth portions 11 is arranged radially about the center of the connecting hole 1 at a predetermined equiangular, except for a larger chamfer formed between two of the seven tooth portions 11 located at the top area of the connecting hole 1. It is noted that the chamfer is configured to prevent one of the projecting portions 311 from passing through the connecting hole 1 so as to ensure that the only way to eject the connecting element 31 is to rotate the multiple projecting portions 311 to be in alignment with the corresponding tooth portions 11.

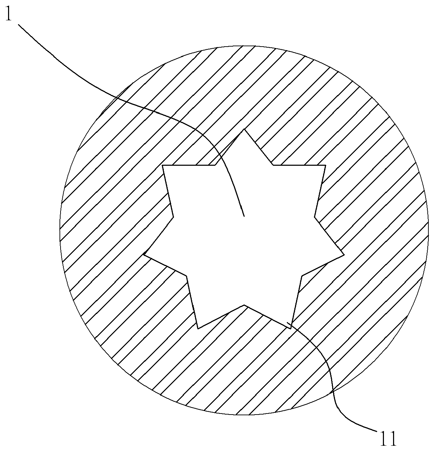

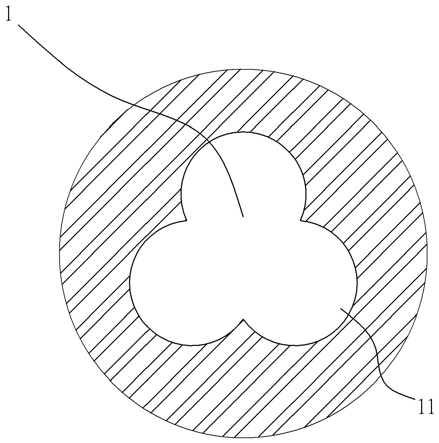

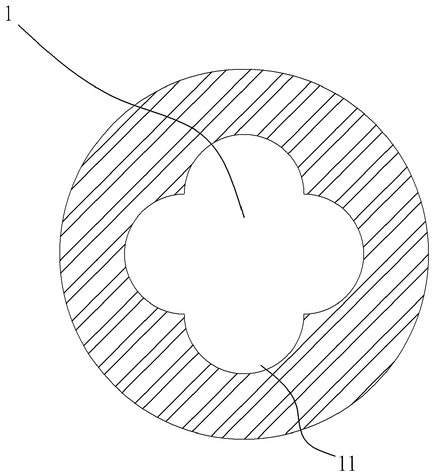

Referring to FIG. 9 showing a schematic cross-sectional view of a second embodiment of the connecting hole 1, the connecting hole 1 in this embodiment has seven tooth portions 11 each having a triangle profile and being arranged radially about the center of the connecting hole 1 at an equiangular, and each of the seven portions 11 has a same size. Furthermore, the plurality of tooth portions 11 in FIG. 9 extend from a polygonal hole instead of a round hole. Referring to FIGS. 10 and 11 respectively showing cross-sectional views of other embodiments of the connecting hole 1, the connecting hole 1 in FIG. 10 has three tooth portions 11 each having a same size round profile, and the connecting hole 1 in FIG 11 has four tooth portions 11 each having a same size round profile, wherein the tooth portions 11 in FIGS. 10 and 11 are arranged radially about a center of the connecting hole 1 at a equiangular.

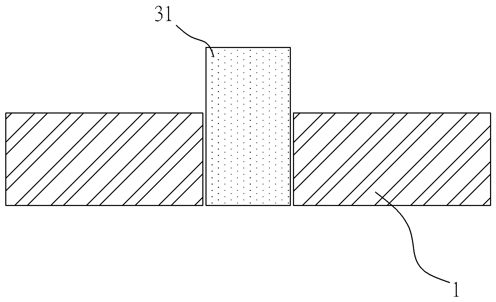

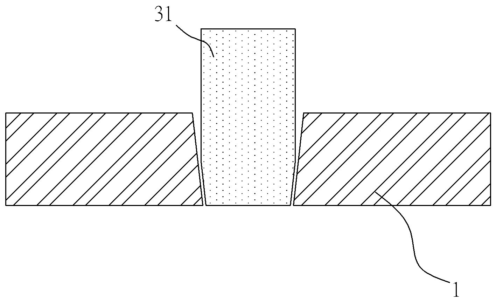

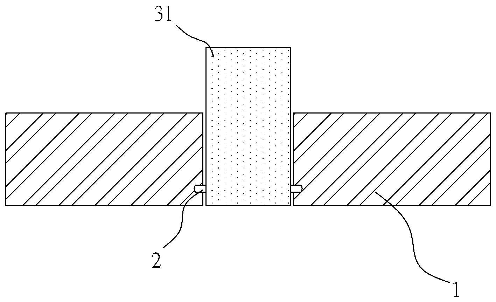

Referring to FIGS. 12 to 14 showing cross-sectional views of the connecting element 31 passing through the connecting hole 1, the connecting hole 1 and the connecting element 31 are connected through rotation or frictionally engagement, and therefore a cross section of the connecting hole 1 can be varied with respect to the connecting element 31. For example, a diameter of the connecting hole 1 is increasingly reduced in cross section in a direction of insertion of the securing member 3, as shown in FIG. 13, whereby the connecting element 31 is in snug fit engagement with the connecting hole 1. Alternatively, as shown in FIG. 12, the diameter of the connecting hole 1 remains the same in cross section in a direction of insertion of the securing member 3. In a further embodiment, as shown in FIG. 14, at least an engaging element 12 is disposed on an outer periphery of the connecting element 31. The engaging element 12 is engaged with an inner periphery of the connecting hole 1 so as to fix the connecting element 31 and the connecting hole 1.

## Claims

1. A connector comprising a male connecting article and a female connecting article for connecting a male connecting article, wherein a connecting hole (1) having a teeth-like configuration is disposed on the female connecting article, wherein the connecting hole (1) having a teeth-like configuration comprises:
a plurality of tooth portions (11) spaced apart from each other and arranged radially about a center of the connecting hole (1) at a predetermined angle; and
the male connecting article comprising a connecting element (31) formed with multiple circumferentially outwardly projecting portions (311) corresponding in position to the plurality of tooth portions (11) so as to allow the multiple circumferentially outwardly projecting portions (311) to pass through the connecting hole (1),
**characterized in that**
the connecting element (31) of the male connecting article has substantially a cylindrical shape, wherein the multiple circumferentially outwardly projecting portions (311) are provided at one end thereof, wherein each of the multiple circumferentially outwardly projecting portions (311) has a length larger than a length of each of the plurality of tooth portions (11), and
the connecting element (31) being deformable and depressible and having a diameter slightly larger than a diameter of the connecting hole (1) of the female connecting article, such that the multiple projecting portions (311) being placed in alignment with the corresponding tooth portions (11) and the connecting element (31) being squeezed to reduce a diameter thereof, so as to pass through the tooth portions (11) and the connecting hole (1), wherein after the multiple projecting portions (311) passed though the connecting hole (1), the connecting element (31) is expanded to abut against the connecting hole (1) such that an outer periphery of the connecting element (31) is in frictional contact with an inner periphery of the connecting hole (1) and the connecting hole (1) is positioned between the multiple circumferentially outwardly projecting portions (311) and the end of the male connecting article opposite to the connecting element (31), the female connecting article being rotatable about the connecting element (31).

2. The connector of claim 1, wherein the plurality of tooth portions (11) of the connecting hole (1) are integrally formed with the female connecting article or detachably connected with the female connecting article and/or wherein the multiple circumferentially outwardly projecting portions (311) and the connecting element (31) are integrally formed with the male connecting article or are detachably connected with the male connecting article.

3. The connector of claim 1 or 2, wherein the male and/or female connecting article is one of an extension rod (3), a positioning device (2), a protective sheath, an adjustable sheath, a fixing element, a portable device, a tablet PC, an electronic book, an electronic game console, a case and a cable.

4. The connector of any one of the preceding claims, wherein each of the plurality of tooth portions (11) of the connecting hole (1) has a same size as one another or a different size than one another and/or is arranged radially about the center of the connecting hole (1) at a predetermined equiangular or at a predetermined non-equiangular, so as to form a symmetrical or an asymmetrical configuration.

5. The connector of any one of the preceding claims, wherein the number of the multiple circumferentially outwardly projecting portions (311) of the male connecting article is equal or unequal to the number of the plurality of tooth portions (11) of the female connecting article.

6. The connector of any one of the preceding claims, wherein the multiple projecting portions (311) of the male connecting article are to be placed in alignment with the plurality of tooth portions (11) of the female connecting article in order to pass through the connecting hole (1), and after the multiple projecting portions (311) pass through the connecting hole (1), the male connecting article is being rotated to enable the multiple projecting portions (311) to be in non-alignment with the plurality of the tooth portions (11) in such a way as to form an interleaving format between the tooth portions (11) and the multiple projecting portions (311), and in order to provide a better connection therebetween with the frictional contact.

7. The connector of any one of the preceding claims, wherein the rotation of the male connecting article to be assembled with the connecting hole (1) is in response to the friction between the outer periphery of the connecting element (31) and the inner periphery of the connecting hole (1), whereby generating a frictional sound along with the rotation.

8. The connector of any one of the preceding claims, wherein a diameter of the connecting hole (1) is increasingly reduced in cross section in a direction of insertion of the male connecting article, or the diameter of the connecting hole (1) remains the same in cross section in a direction of insertion of the male connecting article.

9. The connector of any one of the preceding claims, wherein each of the plurality of tooth portions (11) has a round, arc, triangle, or polygonal profile and is connected with each other to form the teeth-like configuration.

10. The connector of any one of the preceding claims, wherein the connecting element (31) of the male connecting article has a hollow portion (32) formed therein to enable the connecting element (31) to be depressible so as to be mounted in the connecting hole (1).

## Patentansprüche

1. Verbinder umfassend einen Steckerverbindungsartikel und einen Buchsenverbindungsartikel zur Verbindung mit einem Steckerverbindungsartikel, wobei ein Verbindungsloch (1) mit einer zahnähnlichen Konfiguration an dem Buchsenverbindungsartikel vorgegehen ist, wobei das Verbindungsloch (1) mit der zahnähnlichen Konfiguration umfasst:
eine Mehrzahl von Zahnabschnitten (11), die voneinander beabstandet sind und in einem vorgegebenen Winkel radial um eine Mitte des Verbindungslochs (1) angeordnet sind, und
wobei der Steckerverbindungsartikel ein Verbindungselement (31) umfasst, das mit mehreren vom Umfang nach außen hervorstehenden Abschnitten (311) ausgebildet ist, die korrespondierend zu der Mehrzahl von Zahnabschnitten (11) positioniert sind, sodass die mehreren vom Umfang nach außen hervorstehenden Abschnitte (311) durch das Verbindungsloch (1) hindurchgeführt werden können,
**dadurch gekennzeichnet, dass**
das Verbindungselement (31) des Steckerverbindungsartikels im Wesentlichen eine zylindrische Form hat, wobei die mehreren vom Umfang nach außen hervorstehenden Abschnitte (311) an einem Ende davon ausgebildet sind, wobei jeder der mehreren vom Umfang nach außen hervorstehenden Abschnitte (311) eine Länge hat, die größer ist als eine Länge von jedem der Mehrzahl von Zahnabschnitten (11), und
wobei das Verbindungselement (31) verformbar und zusammendrückbar ist und einen Durchmesser hat, der geringfügig größer ist als ein Durchmesser des Verbindungslochs (1) des Buchsenverbindungsartikels, sodass die mehreren hervorstehenden Abschnitte (311), die mit den korrespondierenden Zahnabschnitten (11) fluchtend positioniert sind, und das Verbindungselement (31) gedrückt werden können, um dessen Durchmesser zu reduzieren, sodass dieses durch die Zahnabschnitte (11) und das Verbindungsloch (1) hindurchführbar ist, wobei sich das Verbindungselement (31), nachdem die mehreren hervorstehenden Abschnitte (311) durch das Verbindungsloch (1) hindurchgeführt wurden, zum Anliegen an dem Verbindungsloch (1) ausdehnt, sodass eine Außenperipherie des Verbindungselements (31) mit einer Innenperipherie des Verbindungslochs (1) in Reibungskontakt steht und das Verbindungsloch (1) zwischen den mehreren vom Umfang nach außen hervorstehenden Abschnitten (311) und dem dem Verbindungselement (31) gegenüberliegenden Ende des Steckerverbindungsartikels positioniert ist, wobei der Buchscnverbindungsartikel um das Verbindungselement (31) drehbar ist.

2. Verbinder nach Anspruch 1, bei welchem die Mehrzahl von Zahnabschnitten (11) des Verbindungslochs (1) integral mit dem Buchsenverbindungsartikel ausgebildet ist oder abnehmbar mit dem Buchsenverbindungsartikel verbunden ist, und/oder wobei die mehreren vom Umfang nach außen hervorstehenden Abschnitte (311) und das Verbindungselement (31) integral mit dem Steckerverbindungsartikel ausgebildet sind oder abnehmbar mit dem Steckerverbindungsartikel verbunden sind.

3. Verbinder nach Anspruch 1 oder 2, bei welchem der Stecker- und/oder Buchsenverbindungsartikel wahlweise ein Verlängerungsstab (3), eine Positioniervorrichtung (2), eine Schutzhülle, eine verstellbare Hülle, ein Befestigungselement, ein tragbares Gerät, ein Tablet - PC, ein elektronisches Buch, eine elektronische Spielkonsole, ein Gehäuse oder ein Kabel ist.

4. Verbinder nach einem der vorhergehenden Ansprüche, bei welchem die mehreren Zahnabschnitte (11) des Verbindungslochs (1) jeweils eine einander entsprechende Größe oder eine voneinander verschiedene Größe haben und/oder in einem vorgegebenen gleichen Winkel oder in einem vorgegebenen ungleichen Winkel radial um die Mitte des Verbindungslochs (1) angeordnet sind, um eine symmetrische oder eine asymmetrische Konfiguration auszubilden.

5. Verbinder nach einem der vorhergehenden Ansprüche, bei welchem die Anzahl der mehreren vom Umfang nach außen hervorstehenden Abschnitte (311) des Steckerverbindungsartikels gleich oder ungleich der Anzahl der mehreren Zahnabschnitte (11) des Buchsenverbindungsartikels ist.

6. Verbinder nach einem der vorhergehenden Ansprüche, bei welchem die mehreren hervorstehenden Abschnitte (311) des Steckerverbindungsartikels zum Hindurchführen durch das Verbindungsloch (1) fluchtend mit der Mehrzahl von Zahnabschnitten (11) des Buchsenverbindungsartikels zu positionieren sind, wobei der Steckerverbindungsartikel nach dem Durchführen der mehreren hervorstehenden Abschnitte (311) durch das Verbindungsloch (1) so gedreht werden kann, dass die mehreren hervorstehenden Abschnitte (311) nicht entsprechend der Mehrzahl von Zahnabschnitten (11) ausgerichtet sind, wobei auf diese Weise ein Verschränkungsformat zwischen den Zahnabschnitten (11) und den mehreren hervorstehenden Abschnitten (311) ausgebildet wird, um dazwischen mit dem Reibungskontakt eine verbesserte Verbindung bereitzustellen.

7. Verbinder nach einem der vorhergehenden Ansprüche, bei welchem die Drehung des an dem Verbindungsloch (1) anzubringenden Steckerverbindungsartikels in Folge des Reibschlusses zwischen der Außenperiperie des Verbindungselements (31) und der Innenperipherie des Verbindungslochs (1) erfolgt, wodurch während der Drehung ein Schleifgeräusch erzeugt wird.

8. Verbinder nach einem der vorhergehenden Ansprüche, bei welchem ein Durchmesser des Verbindungslochs (1) im Querschnitt in einer Einschubrichtung des Steckerverbindungsartikels allmählich abnimmt oder der Durchmesser des Verbindungslochs (1) im Querschnitt in einer Einschubrichtung des Steckerverbindungsartikels gleich bleibt.

9. Verbinder nach einem der vorhergehenden Ansprüche, bei welchem jeder der mehreren Zahnabschnitte (11) ein rundes, bogenförmiges, dreieckiges oder polygonales Profil hat und diese miteinander verbunden sind, um die zahnähnlichen Konfiguration auszubilden.

10. Verbinder nach einem der vorhergehenden Ansprüche, bei welchem das Verbindungselement (31) des Steckerverbindungsartikels einen darin ausgebildeten hohlen Abschnitt (32) aufweist, um zu ermöglichen, dass das Verbindungselement (31) zur Montage in dem Verbindungsloch (1) zusammendrückbar ist.

## Revendications

1. Connecteur comprenant une pièce de connexion mâle et une pièce de connexion femelle pour connecter une pièce de connexion mâle, un trou de connexion (1) ayant une configuration semblable à des dents étant disposé sur la pièce de connexion femelle, le trou de connexion (1) ayant une configuration semblable à des dents comprenant :
une pluralité de portions de dents (11) espacées l'une de l'autre et arrangées radialement autour d'un centre du trou de connexion (1) à un angle prédéterminé et
la pièce de connexion mâle comprenant un élément de connexion (31) formé avec de nombreuses portions en saillie circonférentiellement vers l'extérieur (311) qui correspondent en position à la pluralité de portions de dents (11) de manière à permettre aux nombreuses portions en saillie circonférentiellement vers l'extérieur (311) de traverser le trou de connexion (1).
**caractérisé en ce que** l'élément de connexion (31) de la pièce de connexion mâle a essentiellement une forme cylindrique, les nombreuses portions en saillie circonférentiellement vers l'extérieur (311) étant prévues à une extrémité de celui-ci, chacune des nombreuses portions en saillie circonférentiellement vers l'extérieur (311) ayant une longueur plus grande qu'une longueur de chacune de la pluralité de portions de dents (11) et
l'élément de connexion (31) étant déformable et pouvant être enfoncé et ayant un diamètre légèrement plus grand qu'un diamètre du trou de connexion (1) de la pièce de connexion femelle de telle manière que les nombreuses portions en saillie (311) sont placées alignées avec les portions de dents correspondantes (11) et l'élément de connexion (31) est comprimé pour réduire un diamètre de celui-ci de manière à traverser les portions de dents (11) et le trou de connexion (1), cependant que, après que les nombreuses portions en saillie (311) aient traversé le trou de connexion (1), l'élément de connexion (31) est expansé pour buter contre le trou de connexion (1) de telle manière qu'une périphérie extérieure de l'élément de connexion (31) est en contact de friction avec une périphérie intérieure du trou de connexion (1) et le trou de connexion (1) est positionné entre les nombreuses portions en saillie circonférentiellement vers l'extérieur (311) et l'extrémité de la pièce de connexion mâle en face de l'élément de connexion, la pièce de connexion femelle étant rotative autour de l'élément de connexion (31).

2. Connecteur selon la revendication 1, la pluralité de portions de dents (11) du trou de connexion (1) étant formée en étant solidaire avec la pièce de connexion femelle ou étant reliée de manière détachable à la pièce de connexion femelle et/ou les nombreuses portions en saillie circonférentiellement vers l'extérieur (311) et l'élément de connexion (31) étant formés en étant solidaires avec la pièce de connexion mâle ou étant reliés de manière détachable à la pièce de connexion mâle.

3. Connecteur selon la revendication 1 ou 2, la pièce de connexion mâle et/ou femelle étant l'un des éléments une tige d'extension (3), un dispositif de positionnement (2), une gaine de protection, une gaine ajustable, un élément de fixation, un dispositif portable, une tablette électronique, un livre électronique, une console de jeux électronique, un étui et un câble.

4. Connecteur selon l'une quelconque des revendications précédentes, chacune de la pluralité des portions de dents (11) du trou de connexion (1) ayant une même taille que réciproquement une autre ou une taille différente et/ou étant arrangée radialement autour du centre du trou de connexion (1) à une distance prédéterminée équidistante angulairement ou à une distance prédéterminée non équidistante angulairement de manière à former une configuration symétrique ou asymétrique.

5. Connecteur selon l'une quelconque des revendications précédentes, le nombre des nombreuses portions en saillie circonférentiellement vers l'extérieur (311) de la pièce de connexion mâle étant égal ou non égal au nombre de la pluralité des portions de dents (11) de la pièce de connexion femelle.

6. Connecteur selon l'une quelconque des revendications précédentes, les nombreuses portions en saillie (311) de la pièce de connexion mâle devant être placées alignées avec de la pluralité des portions de dents (11) de la pièce de connexion femelle pour traverser le trou de connexion (1) et après que les nombreuses portions en saillie (311) aient traversé le trou de connexion (1), la pièce de connexion mâle tourne pour permettre aux nombreuses portions en saillie (311) de ne pas être alignée avec la pluralité des portions de dents (11) de manière à former un format d'entrelacement entre les portions de dents (11) et les nombreuses portions en saillie (311) et pour créer une meilleure connexion entre elles avec le contact par friction.

7. Connecteur selon l'une quelconque des revendications précédentes, la rotation de la pièce de connexion mâle devant être assemblée avec le trou de connexion (1) étant en réponse à la friction entre la périphérie extérieure de l'élément de connexion (31) et la périphérie intérieure du trou de connexion (1) en générant un son de friction en même temps que la rotation.

8. Connecteur selon l'une quelconque des revendications précédentes, un diamètre du trou de connexion (1) étant de plus en plus réduit en section transversale dans une direction d'insertion de la pièce de connexion mâle ou le diamètre du trou de connexion (1) restant le même en section transversale dans une direction d'insertion de la pièce de connexion mâle.

9. Connecteur selon l'une quelconque des revendications précédentes, chacune de la pluralité des portions de dents (11) ayant un profil rond, en arc, en triangle ou polygonal et étant reliée l'une à l'autre pour former la configuration semblable à des dents.

10. Connecteur selon l'une quelconque des revendications précédentes, l'élément de connexion (31) de la pièce de connexion mâle ayant une portion creuse (32) formée à l'intérieur pour permettre à l'élément de connexion (31) de pouvoir être enfoncé de manière à être monté dans le trou de connexion (1).
